(19) Europäisches Patentamt
European Patent Office
Office européen des brevets

(11) **EP 2 335 064 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(21) Anmeldenummer: **09782719.0**

(22) Anmeldetag: **07.09.2009**

(51) Int Cl.:
**G01N 29/07** *(2006.01)* **G01N 29/22** *(2006.01)*
**G01N 29/24** *(2006.01)* **G01N 29/26** *(2006.01)*
**G01N 29/32** *(2006.01)*

(86) Internationale Anmeldenummer:
**PCT/EP2009/061581**

(87) Internationale Veröffentlichungsnummer:
**WO 2010/026253 (11.03.2010 Gazette 2010/10)**

(54) **IMPULSECHOVERFAHREN MITTELS GRUPPENSTRAHLER UND TEMPERATURKOMPENSATION**

PULSE-ECHO METHOD BY MEANS OF AN ARRAY-TYPE PROBE AND TEMPERATURE COMPENSATION

MÉTHODE PAR IMPULSION-ÉCHO AU MOYEN D'UN RÉSEAU DE TRANSDUCTEURS ET AVEC COMPENSATION THERMIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.09.2008 DE 102008041835**

(43) Veröffentlichungstag der Anmeldung:
**22.06.2011 Patentblatt 2011/25**

(73) Patentinhaber: **GE Sensing & Inspection Technologies GmbH**
**50354 Hürth (DE)**

(72) Erfinder:
• **OBERDOERFER, York**
**40764 Langenfeld (DE)**
• **BERKE, Michael**
**50999 Köln (DE)**
• **KLEINERT, Wolf-Dietrich**
**53125 Bonn (DE)**
• **POIRIER, Jerome**
**91470 Forges Les Bains (FR)**
• **SCHIEKE, Sascha**
**Greer,**
**SC 29650 (US)**

(74) Vertreter: **Patentanwälte Bauer Vorberg Kayser Partnerschaft mbB**
**Goltsteinstraße 87**
**50968 Köln (DE)**

(56) Entgegenhaltungen:
DE-A1- 10 112 583 US-A- 6 082 180
US-A1- 2008 127 732

• **SONG S-J ET AL: "Simulation of 3-D radiation beam patterns propagated through a planar interface from ultrasonic phased array transducers" ULTRASONICS, IPC SCIENCE AND TECHNOLOGY PRESS LTD. GUILDFORD, GB, Bd. 40, Nr. 1-8, 1. Mai 2002 (2002-05-01), Seiten 519-524, XP004357251 ISSN: 0041-624X**

EP 2 335 064 B1

**Beschreibung**

Die Erfindung betrifft ein Impulsechoverfahren zur Ultraschall-Werkstoffprüfung. Dabei handelt es sich um ein akustisches Verfahren zum Auffinden von Materialfehlern, bei welchem Ultraschall verwendet wird. Die Ultraschallprüfung gehört zu den zerstörungsfreien Prüfmethoden. Dadurch lassen sich Bauteile auch im eingebauten Zustand prüfen, z. B. die Tragelemente eines Flugzeuges. Die Ultraschallprüfung ist ein geeignetes Prüfverfahren bei schallleitfähigen Werkstoffen (dazu gehören die meisten Metalle) zur Auffindung von Inneren und äußeren Fehlern, z. B. bei Schweißnähten, Schmiedestücken, Guss, Halbzeugen oder Rohren. Im Maschinenbau ist die Kontrolle der Qualität von Bauteilen eine wichtige Aufgabe, um zum Beispiel die Sicherheit von Personenbeförderüngseinrichtungen oder von Rohrieltungen, beispielsweise für Gefahrstoffe, zu gewährleisten. Verlegte Eisenbahnschienen werden routinemäßig vön Prüfzügen geprüft. Daher wird die Steigerung der Zuverlässigkeit und Genauigkeit dieser Verfahren angestrebt.

Wie alle Prüfverfahren ist auch die Ultraschallkontrolle genormt und wird nach Richtlinien durchgeführt, beispielsweise gemäß der DIN EN 10228-3 1998-07 Zerstörungsfreie Prüfung von Schmiedestücken aus Stahl - Teil 3: Ultraschallprüfung von Schmiedestücken aus ferritischem und martensitischem Stahl, die hiermit durch Bezugnahme umfasst ist. Für die zerstörungsfreie Prüfung eines Werkstücks durch Ultraschall sind geeignete Prüfgeräte und Verfahren bekannt. Ganz allgemein verwiesen wird auf das Fachbuch von J. und. H. Krautkrämer, Werkstoffprüfung mit Ultraschall, ISBN-13: 978-3-540-15754-0,5. Auflage (1986), Springer (Berlin). Allgemein basieren diese Verfahren auf der Reflexion von Schall an Grenzflächen. Als Schallquelle verwendet man meist einen Ultraschallkopf oder Prüfkopf, dessen Strahlung im Frequenzbereich von 10 kHz bis 100 MHz liegt. Beim Impulsechoverfahren gibt der Ultraschallschallkopf keine kontinuierliche Strahlung ab, sondern sehr kurze Schallimpulse, deren Dauer 1μs und weniger ist. Der vom Sender ausgehende Impuls durchläuft mit der betreffenden Schallgeschwindigkeit das zu untersuchende Werkstück und wird an der Grenzfläche Festkörper-Luft fast vollständig reflektiert. Der Schallkopf kann meist nicht nur Impulse aussenden, sondern auch ankommende Impulse in elektrische Messsignale umwandeln, er arbeitet also auch als Empfänger. Die Zeit, die der Schallimpuls benötigt, um vom Sender durch das Werkstück und wieder zurück zu kommen, wird mit einem Oszilloskop oder einer Rechnereinheit als Auswerteinheit gemessen. Bei bekannter Schallgeschwindigkeit c im Material lässt sich auf diese Weise z.B. die Dicke eines Werkstücks kontrollieren. Kernstück eines solchen Prüfkopfes ist wenigstens ein Ultraschallwandler in Form z. B. eines piezoelektrischen Elements. Es ist ferner bekannt, beispielsweise aus der WO 2007/144271, einen Gruppenstrahler aus mehreren, separat ansteuerbaren, sich in einem festen Anordnungsverhältnis befindlichen Ultraschallwandlern zur Erzeugung und zum Empfang der Ultraschallimpulse zu verwenden.

Der oder die Wandler werden meist unter Zwischenlage einer Anpassungsschicht - auch Vorlaufkörper genannt - beispielsweise in Keilform, meist aus einem thermoplastischen Kunststoff wie Polymethylmethacrylat (PMMA), an das zu untersuchende Werkstück gekoppelt. Am Vorlaufkörper ist eine Koppelfläche vorhanden, über die der von dem oder den Ultraschallwandlern erzeugte Schall in das zu prüfende Werkstück einkoppelbar ist, wobei die Keilform einen schrägen Schalleintritt in das Werkstück bewirkt. Der Vorlaufkörper und das oder die piezoelektrischen Elemente sind i. A. in einem Gehäuse angeordnet, das auf seiner einen Seite verschlossen ist und auf seiner anderen Seite eine Koppelöffnung aufweist, durch die der von der Schallankoppelfläche abgestrahlte Ultraschall austreten kann.

Zur Kopplung zwischen Werkstück und Prüfkopf, d.h. dem Vorlaufkörper, wird auf die Oberfläche des zu untersuchenden Werkstücks ein Koppelmittel (z. B. Kleister (Lösung), Gel, Wasser oder Öl) aufgetragen. Meist wird mit dem Prüfkopf die zu prüfende Oberfläche abgefahren. Dieses kann manuell, mechanisiert oder automatisch z. B. (innerhalb von Fertigungsstraßen) erfolgen. Bei letzteren wird zwecks Übertragung des Schallsignals das Prüfstück oft in eine geeignete Flüssigkeit getaucht (Tauchtechnik), oder definiert benetzt.

Die Schallgeschwindigkeit ist eine der wesentlichen Größen, mittels der die genaue Ortung von Fehlern eines Werkstücks und/oder dessen Bemaßung ermittelt wird. Die Schallgeschwindigkeit wird bei den meisten Ultraschallverfahren als bekannt vorausgesetzt.

Es hat sich aber gezeigt, dass die Schallgeschwindigkeit des für den Vorlaufkörper verwendeten thermosplastischen Kunststoffs stark temperaturabhängig ist, zumindest im Vergleich zu den zu untersuchenden, meist metallischen Werkstücken. Dieses Problem ist aus der DE 3327526 A1 bereits bekannt. In dieser wird zur Temperaturkompensation bei einem SE-Prüfkopf mittels eines Im Vorlaufkörper eingebrachten Testreflektors die Laufzeit und damit die temperaturabhängige Schallgeschwindigkeit bestimmt, um Laufzeltabweichungen zu kompensieren.

Eine Veränderung der Schallgeschwindigkeit Im Vorlaufkörper aufgrund einer Temperaturänderung kann z. B. bei einem keilförmigen Vorlaufkörper dazu führen, dass sich der Einschallwinkel in das Werkstück z. B. gegenüber der Angabe auf dem Vorlaufkörper ändert. Auch bei einer elektronischen Einstellung des Einschallwinkels z.B. mittels eines Gruppenstrahlers kann dies zu Fehlern führen.

Aus der DE 3441894 A1 Ist ferner bekannt, Schallgeschwindigkeiten In einem Werkstück mittels des Rückwandechos zu ermitteln.

Aus der DE 101 12 583 A1 ist ein Verfahren zur Temperaturkompensation bei einem Ultraschalldichtesensor bekannt. Bei diesem wird die Ermittlung der Schallgeschwindigkeit in einem Vorlaufkörper für die Kompensation der Temperaturabhängigkelt von Ultraschalluntersuchungen verwendet.

Vor diesem Hintergrund haben sich die Erfinder der vorliegenden Erfindung die Aufgabe gestellt, ein verbessertes Impulsechoverfahren bereitzustellen, bei dem die Temperaturabhängigkeit der Schallgeschwindigkeit Im Vorlaufkörpers vergleichsweise einfach und genau gemessen und gegebenenfalls bei der Auswertung der Ultraschalluntersuchung kompensiert wird. Diese Aufgabe wird durch ein Verfahren gemäß dem Anspruch 1 gelöst. Vorteilhafte Ausgestaltungen sind jeweils Gegenstand der abhängigen Ansprüche.

Bei dem Verfahren zur zerstörungsfreien Ultraschalluntersuchung wird wenigstens ein Ultraschallimpuls mittels wenigstens eines Ultraschallsenders in ein zu untersuchendes Werkstück abgestrahlt. Die Erfindung ist nicht hinsichtlich des Werkstücks eingeschränkt, im Allgemeinen wird es jedoch aus einem akustisch leitenden Material bestehen. Der Ultraschallimpuls wird an Grenzflächen, beispielsweise an dessen Rückwand, und Ungänzen Im Werkstück reflektiert. Der reflektierte Ultraschall wird mittels wenigstens eines Ultraschallempfängers empfangen und die zugehörigen signale werden ausgewertet. Die aufgezeichneten Signale werden beispielsweise in zeit- oder ortsabhängiger Darstellung zur Anzeige gebracht, beispielsweise mittels Oszilloskop oder einem Computerprogrammprodukt, das auf einem Computer mit Anzeigevorrichtung ausgeführt wird. Die ortsabhängige Darstellung ist beispielsweise über die Schallgeschwindigkeit mit der zeitabhängigen Darstellung verknüpft. Der Ultraschall durchdringt bei seiner Ausbreitung vom Sender zum Werkstück und auf dem Weg zurück vom Werkstück zum Empfänger einen z. B. keilförmigen Vorlaufkörper, der zwischen dem Werkstück und dem Sender beziehungsweise Empfänger angeordnet ist.

Das Verfahren zeichnet sich dadurch aus, dass wenigstens ein der vorher erwähnten Untersuchung des Werkstücks vor-, zwischen- oder nachgeschalteter Schritt zur Bestimmung der Schallgeschwindigkeit im Vorlaufkörper vorgesehen ist, bei dem mittels eines Gruppenstrahlers aus selektiv ansteuerbaren Wandlern, jeweils wenigstens ein erster Wandler als Sender wenigstens eines Ultraschallimpulses und wenigstens ein zweiter Wandler als Empfänger des Ultraschallimpulses fungieren und die Schallgeschwindigkeit im Vorlaufkörper wenigstens mittels der berechneten, kürzesten Schallstrecke des Ultraschalls zwischen den betreffenden Wandlern ermittelt wird. Neben dem kürzesten Abstand der Wandler kann auch deren gemessener, auf die Koppelfläche lotrechter Abstand zur Koppelfläche an das Werkstück zur Berechnung der Schallstrecke herangezogen werden.

Durch die Verwendung eines Gruppenstrahlers mit selektiv ansteuerbaren Wandlern können mehrere Probleme einfach gelöst werden. Einerseits kann durch die selektive Verwendung von räumlich möglichst weit voneinander beabstandeter Wandler als Sender beziehungsweise Empfänger eine vergleichsweise lange Schallstrecke beispielsweise im Wesentlichen in Richtung der Längsrichtung des meist schmalen Vorlaufkörpers zur Bestimmung der Schallgeschwindigkeit des Prüfschalls herangezogen werden; durch eine möglichst lange Schallstrecke wird die Genauigkeit der Schallgeschwindigkeitsbestimmung erhöht. Zum Erreichen einer möglichst langen Schallstrecke und zur Steigerung der Genauigkeit werden im Schritt zur Bestimmung der Schallgeschwindigkeit daher bevorzugt die äußersten Wandler des Gruppenstrahlers verwendet.

Anderseits wird durch die Verwendung eines Gruppenstrahlers die Möglichkeit eröffnet, durch die Wahl des Ortes und/oder durch die Anzahl der selektiv angesteuerten Wandler die Schallabstrahlung leicht an die Geometrie und/oder Dämpfung des Vorlaufkörpers anzupassen, so dass der ausgestrahlte Ultraschallimpuls tatsächlich einen Empfänger erreicht. Bevorzugt umfasst der Gruppenstrahler daher mehr als drei selektiv ansteuerbare Wandler. Ein die eigentliche Ultraschalluntersuchung störender Testreflektor ist zudem vorteilhaft entbehrlich. Die Messung der temperaturabhängigen Schallgeschwindigkeit kann im einfachen Fall dazu dienen, eine Überhitzung des Vorlaufkeils zu detektieren.

Bevorzugt wird die im Schritt zur Bestimmung der Schallgeschwindigkeit bestimmte Schallgeschwindigkeit des Vorlaufkörpers bei der Auswertung der Signale bei der Ultraschalluntersuchung des Werkstücks verwendet. Wie eingangs beschrieben ist die ortsabhängige Darstellung über die mit der Temperatur variierende Schallgeschwindigkeit mit der zeitabhängigen Darstellung verknüpft. Daher dient eine genaue, nahezu zeitgleiche Bestimmung der Schallgeschwindigkeit zur Steigerung der Genauigkeit der Ultraschalluntersuchung des Werkstücks, beispielsweise im Hinblick auf dessen Abmessung oder der Lage der darin enthaltenen Ungänzen. Es dürfte dem Fachmann klar sein, dass er durch Wiederholung des Schrittes, Umkehrung der Schallausbreitung und/oder durch Verwendung weiterer Wandler, d.h. Schallstrecken, die Genauigkeit der Schallgeschwindigkeitsbestimmung im Vorlaufkörper steigern kann.

Bevorzugt erfolgt im Schritt zur Bestimmung der Schallgeschwindigkeit im Vorlaufkörper die Ermittlung der Schallgeschwindigkeit mittels wenigstens eines Rückwandechos des Vorlaufkörpers. Dadurch wird einerseits eine lange Schallstrecke erreicht, andererseits wird so erreicht, dass die dabei erfolgende Ultraschallausbreitung mittels Longitudinalwellen und nicht mittels Oberflächenwellen erfolgt, deren Schallgeschwindigkeiten sich unterscheiden.

Der Vorlaufkörper kann im Allgemeinen eine beliebige Form aufweisen. Die kürzeste Schallstrecke kann je nach Vorlaufkörpergestalt geometrisch oder durch numerische Simulation ("ray-tracing") berechnet werden. Beispielsweise wird wenigstens die Beabstandung der wenigstens zwei, als Empfänger oder Sender fungierenden Wandler gemessen und zur Berechnung verwendet. Bevorzugt ist der Vorlaufkörper keilförmig oder weist zwei planparallele Flächen auf. Dadurch kann die kürzeste Schallstrecke des Ultraschalls bei der Bestimmung der Schallgeschwindigkeit durch einfache geometrische Berechnungen ermittelt werden.

Das Verfahren eignet sich besonders bei einem Vorlaufkörper aus einem thermoplastischen Kunststoffmaterial, insbesondere aus einem vernetzten Polystyrol-Copolymer, beispielsweise Rexolite®, da dieses Material eine besonders ausgeprägte Abhängigkeit der Schallgeschwindigkeit von der Temperatur aufweist, beispielsweise im Vergleich zu Metallen.

Gemäß einer weiteren bevorzugten Ausgestaltung ist im Schritt zur Bestimmung der Schallgeschwindigkeit im Vorlaufkörper dieser ungekoppelt. Ungekoppelt im Sinne der Erfindung ist so zu verstehen, dass er nicht an das zu untersuchende Werkstück gekoppelt ist. Beispielsweise ist er an Luft gekoppelt. Dadurch kommt es zu keiner Beeinflussung der Ultraschallausbreitung im Vorlaufkörper durch das angekoppelte Werkstück. Insbesondere bei der Verwendung eines Rückwandechos wird durch einen Ankopplung an Luft aufgrund der großen Änderung der akustischen Impedanz beim Übergang vom Vorlaufkörper zur umgebenden Luft der Reflexionsgrad erhöht und damit die Genauigkeit des die Schallgeschwindigkeit bestimmenden Schrittes erhöht. Aus diesem Grund ist prinzipiell unter ungekoppeltem Zustand die Angrenzung der Koppelfläche an jegliches Medium zu verstehen, bei dem letzteres eine gegenüber dem Material des Vorlaufkörpers erheblich andere akustische Impedanz aufweist, so dass bevorzugt innere akustische Totalreflexion des Testschalls im Vorlaufkörper auftritt.

Bevorzugt umfasst das Verfahren ferner wenigstens einen Schritt, bei dem die Laufzeit des Rückwandechos der an das Werkstück angrenzenden oder anzugrenzenden Koppelfläche des Vorlaufkörpers für wenigstens einen der Wandler, der als Sender und Empfänger fungiert, bestimmt wird. D.h. es wird zusätzlich die Laufzeit des Ultraschalls bestimmt, der von dem wenigstens einen im zuvor beschriebenen Schritt als Sender oder als Empfänger fungierenden Wandler ausgesendet, an der Rückwand, d.h. der Koppelfläche, reflektiert und von demselben Wandler empfangen wird. Dadurch kann eine händische Messung dieses Abstands entfallen. Zudem kann so eine genaue und aktuelle Ermittlung erfolgen, da die Abmessungen des Vorlaufkörpers regelmäßig verschleißbedingten Änderungen unterliegen. Beispielsweise kann so bei einem keilförmigen Vorlaufkörper die kürzeste Schallstrecke zwischen den Wandlern anhand des Abstandes der Wandler und zwei Laufzeitmessungen des Rückwandechos, bei denen jeweils der betreffende Wandler als Sender und als Empfänger dient, sehr genau ermittelt werden.

Bevorzugt umfasst der Gruppenstrahler den wenigstens einen Ultraschallsender, der zur zerstörungsfreien Ultraschalluntersuchung wenigstens einen Ultraschallimpuls in das zu untersuchende Werkstück abstrahlt, und den wenigstens einen Ultraschallempfänger, der die Ultraschallimpulse empfängt. Anders ausgedrückt, wird der Gruppenstrahler sowohl für die Schallgeschwindigkeitsbestimmung im Vorlaufkörper als auch für die eigentliche Ultraschalluntersuchung des Werkstücks verwendet. Die vereinfacht das erfindungsgemäße Verfahren.

Bei der Auswertung im Schritt zur Bestimmung der Schallgeschwindigkeit im Vorlaufkörper kann das Signal des empfangenden Wandlers des Gruppenstrahlers auf die aufsteigende Flanke oder einen Nulldurchgang des Impulsechos getriggert sein, um die Laufzeit zu bestimmen. Es hat sich aber überraschend gezeigt, dass bei einer Triggerung auf die Impulsspitze des empfangenen Impulsechos die Genauigkeit gesteigert werden kann, weshalb diese Vorgehensweise bevorzugt verwendet wird. Dabei kann die Auswertung z.B. in einer getrennt vom Prüfkopf ausgebildeten (nicht dargestellten) Ansteuereinheit erfolgen. Mit dieser kann auch die zur Ansteuerung des Gruppenstrahlers zur Aussendung von Ultraschallpulsen erforderliche digitale und ggf. analoge Ansteuerelektronik zu einer gemeinsamen Ansteuer- und Auswerteeinheit zusammengefasst sein.

In einer weiteren bevorzugten Ausgestaltung des erfindungsgemäßen Verfahrens wird ein Gruppenstrahler für die Erzeugung der Ultraschallpulse für die Werkstoffprüfung verwendet. Dieser wird dabei so angesteuert, dass der Einschallwinkel in das Werkstück kontrolliert eingestellt wird. Hierzu wird die im Rahmen des erfindungsgemäßen Verfahrens ermittelte Schallgeschwindigkeit c im Vorlaufkörper bei der elektronischen Einstellung berücksichtigt. Diese Verfahrensführung kann insbesondere in der vorstehend genannten Ansteuer- und Auswerteeinheit implementiert sein.

Es wird darauf hingewiesen, dass aus der mit dem erfindungsgemäßen Verfahren bestimmten Schallgeschwindigkeit c im Vorlaufkörper aus dem tabellierten Zusammenhang Temperatur - Schallgeschwindigkeit auf die Temperatur des Vorlaufkörpers und damit indirekt auch auf die Temperatur des Werkstücks zu schließen. Hieraus lässt sich ggf. auch eine temperaturbedingte Korrektur der Schallgeschwindigkeit im Werkstück bestimmen, was z.B. Einfluss auf den sich Im Werkstück ergebenden Einschallwinkel bei Schrägeinschallung haben kann. Dies kann z.B. im Zusammenhang mit der sog. AVG-Methode vorteilhaft sein. Beispielhaft wird in diesem Zusammenhang auf die Patentanmeldungen DE 10 2008 037 173, DE 10 2008 002 445 sowie DE 10 2008 002 450 derselben Anmelderin verwiesen, die im Zusammenhang stehen mit der Verallgemeinerung der AVG-Methode auf Prüfeinrichtungen mit elektronisch einstellbarem Einschallwinkel. Die genannten Patentanmeldungen werden durch diese Bezugnahme vollumfänglich zum Offenbarungsgehalt der vorliegenden Anmeldung hinzugefügt. Auch hierzu geeignete Verfahrensschritte eines solchen Korrekturverfahrens stellen eine bevorzugte Weiterbildung des erfindungsgemäßen Verfahrens dar und können insbesondere in einer ansteuer- und Auswerteeinheit der erfindungsgemäßen Vorrichtung integriert sein.

Es wird ferner eine Vorrichtung zur Durchführung des Verfahrens in wenigstens einer der zuvor beschriebenen vorteilhaften Ausgestaltungen beschrieben. Die Vorrichtung umfasst wenigstens einen Ultraschallsender zur Abstrahlung wenigstens eines Ultraschallimpulses in ein zu untersuchendes Werkstück, wobei die Ultraschallimpulse an Grenzflächen im Werkstück reflektiert werden. Ferner sind wenigstens ein Ultraschallempfänger zum Empfang des reflektierten Ultraschalls, eine Auswerteeinheit zur Auswertung der zugehörigen Signale und ein Vorlaufkörper vorgesehen, der so zwischen dem Werkstück und dem Sender angeordnet ist, dass der Ultraschall diesen durchdringt. Die Vorrichtung zeichnet sich dadurch aus, dass die Vorrichtung einen Gruppenstrahler aus selektiv ansteuerbaren Wandlern zur Durchführung des wenigstens einen Schrittes zur Bestimmung der Schallgeschwindigkeit im Vorlaufkörper umfasst, bei dem jeweils wenigstens ein erster Wandler des Gruppenstrahlers als Sender wenigstens eines Ultraschallimpulses und wenigstens ein zweiter Wandler des Gruppenstrahlers als Empfänger des Ultraschallimpulses fungieren, und die Schallgeschwindigkeit im Vorlaufkörper wenigstens durch Laufzeitmessung des Ultraschalls entlang der kürzesten Schallstrecke des Ultraschalls zwischen den betreffenden, beabstandeten Wandlern ermittelt wird.

Wie schon zuvor erörtert können durch die Verwendung eines Gruppenstrahlers mit selektiv ansteuerbaren Wandlern mehrere Probleme einfach gelöst werden. Einerseits kann durch die selektive Verwendung von räumlich möglichst weit voneinander beabstandeten Wandlern als Sender beziehungsweise Empfänger eine vergleichsweise lange Schallstrecke (beispielsweise im Wesentlichen in Richtung der Längsrichtung des meist schmalen Vorlaufkörpers) zur Bestimmung der Schallgeschwindigkeit des Prüfschalls im Vorlaufkörper herangezogen werden; durch eine möglichst lange Schallstrecke wird die Genauigkeit der Schallgeschwindigkeit erhöht. Anderseits wird durch die Verwendung eines Gruppenstrahlers die Möglichkeit eröffnet, durch die Wahl des Ortes und/oder durch die Anzahl der selektiv angesteuerten Wandler die Schallabstrahlung leicht so an die Geometrie und/oder Dämpfung des Vorlaufkörpers anzupassen, dass der ausgestrahlte Ultraschall tatsächlich einen Empfänger erreicht. Bevorzugt umfasst der Gruppenstrahler daher mehr als zwei selektiv ansteuerbare Wandler. Ein die eigentliche Ultraschalluntersuchung störender Testreflektor ist zudem vorteilhaft entbehrlich.

Im Folgenden wird die Erfindung anhand einer schematischen Darstellung sowie der zugehörigen geometrischen Berechnung und einer bevorzugten Ausführungsform erläutert, ohne die Erfindung auf das Gezeigte und Beschriebene zu beschränken.

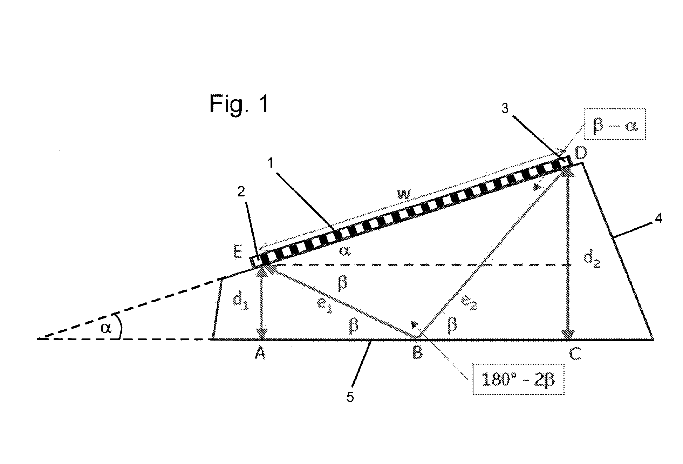

Bei der bevorzugten Ausführungsform des erfindungsgemäßen Verfahrens wird mittels des in Figur 1 gezeigten Prüfkopfs eine Ultraschalluntersuchung mittels Impulsecho an einem in Figur 1 nicht dargestellten Werkstück vorgenommen. Dazu wird in dieser Ausführungsform der Gruppenstrahler 1 des Prüfkopfs verwendet, der auch zur Bestimmung der Schallgeschwindigkeit im Vorlaufkörper 4 des Prüfkopfs Anwendung findet, wie später beschrieben werden wird. Der Gruppenstrahler 1 umfasst mehrere (hier 22), selektiv ansteuerbare Schallwandler (2, 3). Bei der Ultraschalluntersuchung können diese gemeinsam und phasengleich, gemeinsam aber untereinander phasenverschoben, selektiv in Gruppen, usw. angesteuert werden. Die Erfindung ist hinsichtlich der Vorgehensweise bei der Ultraschalluntersuchung nicht eingeschränkt, und es obliegt dem Fachmann, die jeweils geeignete Wahl der Ansteuerung zu treffen. Der von den Wandlern 2, 3 des Gruppenstrahlers 1 erzeugte Ultraschall durchdringt einen Vorlaufkeil 4 aus thermoplastischem Material, um in das Werkstück einzudringen, das angrenzend an die Koppelfläche 5 des keilförmigen Vorlaufkörpers 4, im Folgenden auch als Vorlaufkeil bezeichnet, angeordnet ist. Wie zuvor beschrieben, weist die Schallgeschwindigkeit im Vorlaufkeil 4 eine i. A. im Vergleich zum Werkstück starke Temperaturabhängigkeit auf. In der Regel ist hier aber die Durchführung einer separaten Temperaturmessung am Vorlaufkörper 4 entbehrlich, da sich die Schallgeschwindigkeit $c$ im Vorlaufkörper unmittelbar als Ergebnis des erfindungsgemäßen Verfahrens ergibt. Sollte es unter bestimmten Umständen dennoch vorteilhaft sein, neben der Schallgeschwindigkeit $c$ auch den Absolutwert $T$ der Temperatur des Vorlaufkörpers zu kennen, so kann aus Tabellenwerken für den Werkstoff des Vorlaufkörpers aus der gemessenen Schallgeschwindigkeit $c$ auf die Temperatur des Vorlaufkörpers geschlossen werden.

Um die Genauigkeit der Ultraschalluntersuchung für möglichst alle Temperaturen zu erhöhen, wird erfindungsgemäß ein Schritt zur Bestimmung der Schallgeschwindigkeit im Vorlaufkörper 4 vorgeschlagen. Dieser Schritt kann vor, nach oder zwischen der zuvor beschriebenen Ultraschalluntersuchung durchgeführt und gegebenenfalls mehrfach wiederholt werden.

Bei diesem Schritt wird zur Ultraschallabstrahlung ebenfalls der Gruppenstrahler 1 verwendet. Ferner ist der Vorlaufkeil 4 dabei mit seiner Koppelfläche 5 nicht an ein Werkstück angekoppelt, d.h. er ist ungekoppelt, beispielsweise wird gegen Luft gemessen. Der Schritt umfasst in dieser Ausgestaltung drei Einzelschritte. In zwei Unterschritten wird das jeweilige Rückwandecho der jeweils von den äußersten Wandlern 2 und 3 erzeugten stark divergenten Schallbündel von diesen empfangen und anhand des jeweiligen Rückwandechos die zugehörige Laufzeit $t_1$ und $t_2$ ermittelt. Diese Unterschritte können zeitlich verschoben, aber auch zeitgleich, durchgeführt werden. Es wird darauf hingewiesen, dass die vom Ultraschall kürzesten Schallstrecken die Strecken $d_1$ und $d_2$ sind, die jeweils dem lotrechten Abstand der Wandler 2, 3 von der Koppelfläche 5 entsprechen. In einem dritten Unterschritt wird die Laufzeit $t$ des Ultraschalls vom Wandler 3 als Sender zum Wandler 2 als Empfänger (oder umgekehrt) unter Ausbildung eines Rückwandechos gemessen. Die kürzeste Schallstrecke $e_1+e_2$ des Ultraschalls zeichnet sich dadurch aus, dass der Einfallswinkel $\beta$ dem Ausfallswinkel $\beta$ an der Rückwand des Vorlaufkörpers 4 (Koppelfläche 5) entspricht.

Im Fall eines dickeren z.B. keilförmigen Vorlaufkörpers kann es vorteilhaft sein, wenn die vorstehend beschriebene Erfassung des Rückwandechos am ungekoppelten Vorlaufkörper nicht mittels des Schallbündels eines einzelnen wandlers des Gruppenstrahlers durchgeführt wird, sondern mehrere (benachbarte) Wandler des Gruppenstrahlers z.B. am rechten sowie am linken Rand zusammengefasst werden, um Schallbündeln mit reduzierter Divergenz zu erzeugen. Auch eine solche modifizierte Verfahrensführung soll vom erfindungsgemäßen Verfahren mit umfasst sein.

Aus den drei gemessenen Laufzeiten $t$, $t_1$, $t_2$ und des bekannten oder vorher bestimmten kürzesten Abstands der Wandler $w$ lässt sich die Schallgeschwindigkeit $c$ im Vorlaufkeil 4 wie folgt bestimmen:

$$c = \frac{w}{\sqrt{t^2 - t_1\,t_2}} = w\,\left(t^2 - t_1\,t_2\right)^{-\frac{1}{2}}$$

Die Formel basiert auf den folgenden geometrischen Berechnungen: Die Abstände $d_1$ und $d_2$ können wie folgt berechnet werden:

$$(1) \qquad d_1 = \frac{c\,t_1}{2} \qquad d_2 = \frac{c\,t_2}{2}$$

Anhand der Dreiecke $\triangle ABC$ und $\triangle BCD$ können $e_1$ und $e_2$ bestimmt werden:

$$(2) \qquad e_1 = \frac{d_1}{\sin\beta} \qquad e_2 = \frac{d_2}{\sin\beta}$$

Für die Summe von $e_1$ und $e_2$ gilt:

$$(3) \qquad e_1 + e_2 = c\,t$$

Mit den obigen Gleichungen für $e_1$ und $e_2$ entspricht dies:

$$(4) \qquad c\,t\sin\beta = d_1 + d_2$$

Bei Umformung unter Verwendung der Gleichungen (1) für $d_1$ und $d_2$ erhält man:

$$(5) \qquad \sin\beta = \frac{t_1 + t_2}{2\,t}$$

Mittels Kosinussatz des Dreiecks $\triangle BDE$ erhält man:

$$(6) \qquad w^2 = e_1^2 + e_2^2 - 2e_1 e_2 \cos(180° - 2\beta)$$

Mit:

$$(7) \quad \cos(180° - 2\beta) = 2\sin^2(\beta) - 1$$

ergibt sich unter Verwendung der Gleichungen (2) und (6):

$$(8) \quad w^2 \sin^2(\beta) = d_1^2 + d_2^2 - 2d_1 d_2 \left(2\sin^2(\beta) - 1\right)$$

Mit den Gleichungen (1), (5) und (8) ergibt sich:

$$(9) \quad w^2 \left(\frac{t_1 + t_2}{2t}\right)^2 = c^2 \left\{ \frac{t_1^2}{4} + \frac{t_2^2}{4} - \frac{t_1 t_2}{2} \left(2\left(\frac{t_1 + t_2}{2t}\right)^2 - 1\right) \right\}$$

oder entsprechend:

$$c = \frac{w}{\sqrt{t^2 - t_1 t_2}} = w \left(t^2 - t_1 t_2\right)^{-\frac{1}{2}}$$

Daher lässt sich bei dem gezeigten keilförmigen Vorlaufkörper 4 des Prüfkopfs die im Vorlaufkörper vorliegende Schallgeschwindigkeit $c$ durch die Messung der Laufzeiten $t$, $t_1$, $t_2$ bestimmen. Diese so genau ermittelte und tatsächlich vorhandene Schallgeschwindigkeit im Vorlaufkörper wird dann der ortsauflösenden Auswertung der eigentlichen Ultraschalluntersuchung des Werkstücks zugrunde gelegt (z. B. bei der Bestimmung des Einschallwinkels & im Werkstück) und steigert somit deren Ermittlungsgenauigkeit.

**Patentansprüche**

1.  Verfahren zur zerstörungsfreien Ultraschalluntersuchung wobei wenigsten ein Ultraschallimpuls mittels wenigstens eines Ultraschallsenders (3) in ein zu untersuchendes Werkstück abgestrahlt wird und der Ultraschallimpuls an Grenzflächen im Werkstück reflektiert wird, der reflektierte Ultraschall mittels wenigstens eines Ultraschallempfängers (2) empfangen wird und die zugehörigen Signale ausgewertet werden und der Ultraschall dabei einen, zwischen dem Werkstück und dem Sender beziehungsweise Empfänger angeordneten Vorlaufkörpers (4) durchdringt, wobei das Verfahren wenigstens einen Schritt zur Bestimmung der Schallgeschwindigkeit im Vorlaufkörper (4) mittels eines Gruppenstrahlers (1) aus selektiv ansteuerbaren Wandlern (2, 3) umfasst, bei dem jeweils wenigstens ein erster Wandler (3) des Gruppenstrahlers (1) als Sender wenigstens eines Ultraschallimpulses und wenigstens ein zweiter Wandler (2) des Gruppenstrahlers (1) als Empfänger des Ultraschallimpulses fungieren und die Schallgeschwindigkeit im Vorlaufkörper (4) wenigstens durch Laufzeitmessung des Ultraschalls entlang der kürzesten Schallstrecke (e1, e2) des Ultraschalls zwischen den betreffenden, beabstandeten Wandlern (2, 3) ermittelt wird und wobei die im Schritt zur Bestimmung der Schallgeschwindigkeit bestimmte Schallgeschwindigkeit im Vorlaufkörpers (4) bei der Auswertung der Signale aus der Ultraschalluntersuchung des Werkstücks verwendet wird und wobei im Schritt zur Bestimmung der Schallgeschwindigkeit die räumlich möglichst weit voneinander beabstandeten Wandler (2, 3) des Gruppenstrahlers (1) verwendet werden.

2.  Verfahren gemäß Anspruch 1, **dadurch gekennzeichnet, dass** im Schritt zur Bestimmung der Schallgeschwindigkeit im Vorlaufkörper (4) die Schallgeschwindigkeit mittels wenigstens eines Rückwandechos (e1, e2) des Vorlaufkörpers (4) ermittelt wird.

3. Verfahren gemäß einem der vorhergehenden Ansprüche, **dadurch gekennzeichnet, dass** die kürzeste Schallstrecke (e1, e2) geometrisch oder durch numerische Simulation berechnet wird.

4. Verfahren gemäß einem der vorhergehenden Ansprüche, **dadurch gekennzeichnet, dass** der Vorlaufkörper (4) keilförmig ist oder zwei planparallele Flächen aufweist.

5. Verfahren gemäß einem der vorhergehenden Ansprüche, **dadurch gekennzeichnet, dass** der Vorlaufkörper (4) aus einem thermoplastischen Kunststoffmaterial, bevorzugt aus einem vernetzten Polystyrol-Copolyrner, besteht.

6. Verfahren gemäß einem der vorhergehenden Ansprüche, **dadurch gekennzeichnet, dass** im Schritt zur Bestimmung der Schallgeschwindigkeit im Vorlaufkörper (4) dieser ungekoppelt ist.

7. Verfahren gemäß einem der vorhergehenden Ansprüche, **dadurch gekennzeichnet, dass** das Verfahren wenigstens einen weiteren Schritt umfasst, bei dem die Laufzeit des Rückwandechos der an das Werkstück angrenzenden oder anzugrenzenden Koppelfläche (5) des Vorlaufkörpers (4) für wenigstens einen Wandler (2, 3) des Gruppenstrahlers (1), der als Empfänger und Sender fungiert, bestimmt wird.

8. Verfahren gemäß einem der vorhergehenden Ansprüche, **dadurch gekennzeichnet, dass** der Gruppenstrahler (1) den wenigstens einen Ultraschallsender (2, 3), der zur zerstörungsfreien Ultraschalluntersuchung wenigstens einen Ultraschallimpuls in das zu untersuchende Werkstück abstrahlt und den wenigstens einen Ultraschallempfänger (2, 3), der, die Ultraschallimpulse empfängt, umfasst.

9. Verfahren gemäß einem der vorhergehenden Ansprüche **dadurch gekennzeichnet, dass** der Gruppenstrahler (1) mehr als zwei selektiv ansteuerbare Wandler (2, 3) umfasst.

10. Verfahren gemäß einem der vorhergehenden Ansprüche, **dadurch gekennzeichnet, dass** im Schritt zur Bestimmung der Schallgeschwindigkeit die Auswertung anhand einer Triggerung auf eine Impulsspitze des empfangenen Impulsechos erfolgt.

**Claims**

1. A method for non-destructive ultrasound inspection, wherein at least one ultrasonic pulse is radiated by means of at least one ultrasonic transmitter (3) into a workpiece to be inspected and the ultrasonic pulse is reflected on boundary surfaces in the workpiece, the reflected ultrasound is received by means of at least one ultrasonic receiver (2) and the associated signals are evaluated, and the ultrasound in the process passes through a leading body (4) which is disposed between the workpiece and the transmitter or receiver, wherein the method comprises at least one step for determining the sound velocity in the leading body (4) by means of a phased array (1) comprised of selectively controllable transducers (2, 3), wherein at least one first transducer (3) of the phased array (1) acts as a transmitter of at least one ultrasonic pulse, and at least one second transducer (2) of the phased array (1) acts as a receiver of the ultrasonic pulse, respectively, and the sound velocity in the leading body (4) is determined at least by means of a travel time measurement of the ultrasound along the shortest sound path (e1, e2) of the ultrasound between said spaced transducers (2, 3), and wherein the sound velocity in the leading body (4) determined in the step for determining the sound velocity is used in the evaluation of the signals from the ultrasound inspection of the workpiece, and wherein the transducers (2, 3) of the phased array (1) that are spatially as distant from one another as possible are used in the step for determining the sound velocity.

2. The method according to claim 1, **characterised in that**, in the step for determining the sound velocity in the leading body (4), the sound velocity is determined by means of at least one back-face echo (e1, e2) of the leading body (4).

3. The method according to any one of the preceding claims, **characterised in that** the shortest sound path (e1, e2) is calculated geometrically or by numerical simulation.

4. The method according to any one of the preceding claims, **characterised in that** the leading body (4) is wedge-shaped or has two plane-parallel surfaces.

5. The method according to any one of the preceding claims, **characterised in that** the leading body (4) consists of a thermoplastic synthetic material, preferably a cross-linked polystyrene copolymer.

**6.** The method according to any one of the preceding claims, **characterised in that**, in the step for determining the sound velocity in the leading body (4), the latter is uncoupled.

**7.** The method according to any one of the preceding claims, **characterised in that** the method comprises at least one further step in which the travel time of the back-face echo of the leading body's (4) coupling surface (5) adjoining, or to be adjoined to, the workpiece is determined for at least one transducer (2, 3) of the phased array (1) acting as a transmitter or receiver.

**8.** The method according to any one of the preceding claims, **characterised in that** the phased array (1) comprises the at least one ultrasonic transmitter (2, 3) which, for the non-destructive ultrasound inspection, emits at least one ultrasonic pulse into the workpiece to be inspected, and the at least one ultrasonic receiver (2, 3) which receives the ultrasonic pulses.

**9.** The method according to any one of the preceding claims, **characterised in that** the phased array (1) comprises more than two selectively controllable transducers (2, 3).

**10.** The method according to any one of the preceding claims, **characterised in that** the evaluation in the step for determining the sound velocity is carried out by means of triggering to a pulse peak of the received pulse echo.

**Revendications**

**1.** Procédé d'examen non-destructif par ultrasons, dans lequel au moins une impulsion ultrasonore est émise au moyen d'au moins un émetteur d'ultrasons (3) dans une pièce à examiner et ladite impulsion ultrasonore est réfléchie sur des interfaces dans la pièce, l'ultrason réfléchi est reçu au moyen d'au moins un récepteur d'ultrasons (2) et les signaux associés sont évalués et, ce faisant, l'ultrason traverse un corps de couplage (4) disposé entre la pièce et l'émetteur ou bien le récepteur, le procédé comprenant au moins une étape de détermination de la vitesse du son dans ledit corps de couplage (4) au moyen d'un réseau de transducteurs (1) composé de transducteurs (2, 3) aptes à être commandés de manière sélective, dans lequel respectivement au moins un premier transducteur (3) du réseau de transducteurs (1) fait fonction d'émetteur d'au moins une impulsion ultrasonore et au moins un deuxième transducteur (2) du réseau de transducteurs (1) fait fonction de récepteur de l'impulsion ultrasonore, et la vitesse du son dans le corps de couplage (4) est déterminée au moins par une mesure du temps de propagation de l'ultrason suivant le trajet de son (e1, e2) le plus court de l'ultrason entre les transducteurs (2, 3) espacés en question, et dans lequel la vitesse du son dans le corps de couplage (4) qui est déterminée à l'étape de détermination de la vitesse du son est utilisée lors de l'évaluation des signaux issus de l'examen par ultrasons de la pièce, et dans lequel, à l'étape de détermination de la vitesse du son, on utilise les transducteurs (2, 3) du réseau de transducteurs (1) qui sont espacés le plus possible les uns des autres dans l'espace.

**2.** Procédé selon la revendication 1, **caractérisé par le fait que**, à l'étape de détermination de la vitesse du son dans le corps de couplage (4), la vitesse du son est déterminée au moyen d'au moins un écho de fond (e1, e2) du corps de couplage (4).

**3.** Procédé selon l'une quelconque des revendications précédentes, **caractérisé par le fait que** le trajet du son (e1, e2) le plus court est calculé géométriquement ou par simulation numérique.

**4.** Procédé selon l'une quelconque des revendications précédentes, **caractérisé par le fait que** ledit corps de couplage (4) présente une forme de coin ou présente deux surfaces planes et parallèles.

**5.** Procédé selon l'une quelconque des revendications précédentes, **caractérisé par le fait que** le corps de couplage (4) est réalisé dans une matière plastique thermoplastique, de préférence dans un copolymère de polystyrène réticulé.

**6.** Procédé selon l'une quelconque des revendications précédentes, **caractérisé par le fait que**, à l'étape de détermination de la vitesse du son dans le corps de couplage (4), celui-ci est non-couplé.

**7.** Procédé selon l'une quelconque des revendications précédentes, **caractérisé par le fait que** le procédé comprend au moins une autre étape dans laquelle le temps de parcours de l'écho de fond de la surface de couplage (5) du corps de couplage (4), qui est contiguë ou doit être rendue contiguë à la pièce, est déterminé pour au moins un transducteur (2, 3) du réseau de transducteurs (1), qui fait fonction de récepteur et d'émetteur.

8. Procédé selon l'une quelconque des revendications précédentes, **caractérisé par le fait que** le réseau de transducteurs (1) comprend ledit au moins un émetteur d'ultrasons (2, 3) qui, pour l'examen non-destructif par ultrasons, émet au moins une impulsion ultrasonore dans la pièce à examiner, ainsi que ledit au moins un récepteur d'ultrasons (2, 3) qui reçoit les impulsions ultrasonores.

9. Procédé selon l'une quelconque des revendications précédentes, **caractérisé par le fait que** le réseau de transducteurs (1) comprend plus de deux transducteurs (2, 3) aptes à être commandés de manière sélective.

10. Procédé selon l'une quelconque des revendications précédentes, **caractérisé par le fait que**, à l'étape de détermination de la vitesse du son, l'évaluation se fait à partir d'un déclenchement sur une pointe d'impulsion de l'écho d'impulsion reçu.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007144271 A
- DE 3327526 A1
- DE 3441894 A1
- DE 10112583 A1
- DE 102008037173
- DE 102008002445
- DE 102008002450

**In der Beschreibung aufgeführte Nicht-Patentliteratur**

- **J. ; H. KRAUTKRÄMER.** Werkstoffprüfung mit Ultraschall. Springer, 1986